# EUROPÄISCHE PATENTANMELDUNG

(11) **EP 2 295 828 A2**
(43) Veröffentlichungstag der Anmeldung: **16.03.2011**
(21) Anmeldenummer: 10173961.3
(22) Anmeldetag: 25.08.2010
(51) Int. Cl.: F16F 9/54, B60G 13/00

(54) **Tragrohr mit einem Schwingungsdämpfer**

(30) Priorität: 09.09.2009 DE 102009029303
(71) Anmelder: ZF Friedrichshafen AG, 88038 Friedrichshafen (DE)
(72) Erfinder: Marquar, Hendrik, 97422, Schweinfurt (DE); Schuler, Manfred, 97456, Dittelbrunn (DE); Renn, Josef, 97337, Dettelbach (DE); Stretz, Klaus, 97437, Haßfurt (DE); Sundermann, Karin, 97526, Sennfeld (DE); Zutzmann, Michael, 97424, Schweinfurt (DE)

(57) **Zusammenfassung**

Tragrohr (7) für einen Schwingungsdämpfer (1), umfassend eine axiale Stützfläche, auf der ein äußere Zylinder (3) des Schwingungsdämpfers anliegt, mit einer Fixierkappe (17), die eine zweite axiale Stützfläche zur Sicherung des Zylinders bei einer gegensinnigen Belastung hält, wobei die Fixierkappe formschlüssig mit dem Tragrohr verbunden ist, und zwischen der Fixierkappe und dem Tragrohr zu den beiden Teilen separate Verriegelungsmittel (29) angeordnet sind, die den äußeren Zylinder zum Tragrohr positionieren.

## Beschreibung

Die Erfindung betrifft ein Tragrohr gemäß dem Oberbegriff von Patentanspruch 1.

Aus der DE 66 04 512 U ist ein Federbein bekannt, das ein Tragrohr umfasst, in dem ein austauschbarer Schwingungsdämpfer als Patrone axial fixiert ist. Ein erstes Ende eines äußeren Zylinders stützt sich gegen einen Absatz des Tragrohres fest, wobei der Absatz von einem Boden des Tragrohres gebildet wird.

Eine Schraubkappe fixiert den Zylinder stirnseitig im Bereich einer ein- und ausfahrenden Kolbenstange. Die Schraubkappe ermöglicht den Austausch eines defekten Schwingungsdämpfers, ohne dass das gesamte Federbein aus einem Fahrwerk demontiert werden muss.

Ein prinzipbedingter Nachteil einer Schraubkappe besteht darin, dass innerhalb der Schraubverbindung Korrosion auftreten kann. Des Weiteren wird für die Schraubverbindung eine Mindestgewindelänge benötigt und Gewindeverbindungen sind stets vergleichsweise teuer.

Die Aufgabe der vorliegenden Erfindung besteht darin, einen Verschluss für ein äußeres Tragrohr eines Schwingungsdämpfers zu realisieren, bei dem die aus dem Stand der Technik bekannten Nachteile behoben sind.

Erfindungsgemäß wird die Aufgabe dadurch gelöst, dass zwischen der Fixierkappe und dem Tragrohr zu den beiden Teilen separate Verriegelungsmittel angeordnet sind, die den äußeren Zylinder zum Tragrohr positionieren.

Der große Vorteil besteht darin, dass man keine Gewindeverbindung benötigt, um die Kappe mit dem Tragrohr zu verbinden. Dabei können die Verriegelungsmittel direkt oder indirekt den Zylinder positionieren.

Bei einer Ausführungsform weisen die Fixierkappe an ihrer Innenwandung und das Tragrohr an seiner Außenwand in der Endmontagestellung der Fixierkappe auf dem Tragrohr mindestens einen sich überdeckenden Nutbereich aufweist, in dem das Verriegelungsmittel angeordnet ist. Die Fixierkappe liegt z. B. mit einem Boden an einem Absatz des Zylinders an. Die Verriegelung erfolgt zwischen dem Tragrohr und der Fixierkappe.

In weiterer Ausgestaltung der Erfindung weist die Fixierkappe mindestens eine außenseitige Kopplungsöffnung auf, über die das Verriegelungsmittel in den Nutbereich montierbar ist. Durch die außenseitige Kopplungsöffnung benötigt man kein Spezialwerkzeug, um das Verriegelungsmittel in den Nutbereich einzuführen.

Um keine Zwangsposition der Fixierkappe zum Tragrohr in Umfangsrichtung einhalten zu müssen, weisen das Tragrohr und die Fixierkappe vollständig umlaufende Nuten auf, die den sich überdeckenden Nutbereich bilden.

Zur leichteren Montagebewegung ist die Kopplungsöffnung tangential zum sich überdeckenden Nutbereich ausgerichtet.

Gemäß einem vorteilhaften Unteranspruch wird das Verriegelungsmittel von einem biegefähigen Stab gebildet. Man kann einen größeren Überdeckungswinkel und damit größeren Traganteil des Verriegelungsmittels erreichen, im Vergleich zu einem starren Stab.

Um Form- und Lagetoleranzen im sich überdeckenden Nutbereich ausgleichen zu können, kann das Verriegelungsmittel ein Wellprofil aufweisen. Man kann auch ein Schraubenprofil vorsehen.

Bei einer Alternativlösung weisen der äußere Zylinder des Schwingungsdämpfers außenseitig mindestens einen Nutbereich und das Tragrohr mindestens eine radiale

Durchgangsöffnung auf, wobei der Nutbereich und die mindestens eine radiale Durchgangsöffnung bei bestimmungsgemäßer Position des Schwingungsdämpfers im Tragrohr in axialer Überdeckung stehen, und das Verriegelungsmittel durch eine radiale Schließbewegung in Eingriff gebracht wird.

In weiterer vorteilhafter Ausgestaltung der Erfindung wird die Schließposition des Verriegelungsmittels durch die Innenwandung der Fixierkappe gesichert. Die Fixierkappe wird vom Tragrohr oder dem Schwingungsdämpfer nicht belastet.

Es ist vorgesehen, dass als Verriegelungsmittel mindestens ein Bolzenelement verwendet wird.

Um die Belastung am Tragrohr und am Zylinder zu verteilen, sind mehrere Bolzenelemente zu einer Baueinheit zusammengefasst, wobei die Bolzenelemente zumindest winkelbeweglich miteinander verbunden sind.

Eine besonders einfach zu montierende Baueinheit mehrerer Bolzenelemente zeichnet sich dadurch aus, dass sie im entspannten Zustand ein Zahnstangenprofil aufweist. Die Bolzenelemente sind über elastische Zwischenglieder miteinander verbunden, so dass mehrere Bolzenelemente eine Kreisform bilden können.

Zur leichteren Demontage des Bolzenelements ragt dieses in der Verriegelungsposition über die äußere Mantelfläche des Tragrohrs hinaus.

In weiterer Ausgestaltung der Erfindung ist die Fixierkappe einteilig mit einem Federteller ausgeführt. Ein so genannter hängender Federteller führt zu einer einfachen Tragrohrgeometrie.

Bei einer Fahrzeugtragfeder ist es für die Krafteinleitung bei einigen Anwendungen wichtig, wenn die Feder in einer in Umfangsrichtung definierten Einbaulage montiert ist. Dazu verfügt ein Federteller über eine Profilierung, an der sich die Feder mit ihrer Endwindung in Umfangsrichtung abstützen kann. Damit die definierte Einbaulage des Federtellers und damit der Feder ohne größere Einstellarbeiten möglich ist, ist zwischen der Fixierkappe und dem Tragrohr eine Verdrehsicherung ausgeführt.

Die Verdrehsicherung wird von einer Nut gebildet, in die ein radialer Vorsprung eingreift. Bevorzugt soll die Nut an der Innenwandung der Fixierkappe ausgeführt sein, da dann am Tragrohr bei montierter Fixierkappe keine störenden Ecken und Kanten zu sehen sind.

Das Tragrohr kann eine Schutzeinrichtung für eine aus dem Tragrohr ragende Baugruppe des Schwingungsdämpfers aufweisen, wobei sich die Schutzeinrichtung axial an dem Verriegelungsmittel abstützt. Als Baugruppe ist beispielsweise eine Kolbenstange des im Tragrohr befindlichen Schwingungsdämpfers anzusehen. Die Schutzeinrichtung kann von einem Faltenbalg gebildet werden.

Bei einer Ausführungsform der Erfindung sind zwei bolzenförmige Verriegelungsmittel zu einem u-förmigen Bügel zusammengefasst, wobei ein Verbindungsabschnitt des u-förmigen Bügels für die Schutzeinrichtung einen axialen Anschlag bildet. Man kann den Faltenbalg axial anliegen lassen, so dass bei einer Kolbenstangeneinfahrbewegung der Faltenbalg zusammengedrückt wird. Es ist aber auch möglich, dass der Anschlag nur bei einer Kolbenstangenausfahrbewegung wirksam wird und über den Anschlag der Faltenbalg ab einer definierten Kolbenstangenausfahrposition eine Längendehnung erfährt. Man kann aber auch vorsehen, dass der Anschlag z. B. in die Schutzeinrichtung eingeknöpft wird und somit bei jeder Kolbenstangenbewegung wirksam ist.

Zur gleichmäßigen Kraftübertragung von der Schutzeinrichtung auf den Anschlag sind an der Fixierkappe mehrere bügelförmige Verriegelungsmittel am Tragrohr befestigt.

Eine besonders vorteilhafte Lösung zeichnet sich dadurch aus, dass ein Paar von bügelförmigen Verriegelungsmitteln diametral auf gleicher Höhe an der Fixierkappe angeordnet sind. Ein Schiefstand der Schutzeinrichtung kann nicht auftreten.

Im Hinblick auf eine große Kraftübertragungslänge der bolzenförmigen Verriegelungsmittel zum Tragrohr sind die paarweise angeordneten Bügel ineinander schiebbar.

Bei einer Alternativlösung sind die Fixierkappe und das Tragrohr über einen Bajonettverschluss miteinander verbunden.

Um eine einfache Tragrohrgeometrie zu erreichen, weist das Tragrohr einen Bajonettverschlusseinsatz auf. Dieser Bajonettverschlusseinsatz kann als separates Bauteil hergestellt und im weiteren Herstellungsprozess mit dem Tragrohr verbunden werden.

Des Weiteren kann der Bajonettverschlusseinsatz mit einem Federteller verbunden sein. Auch diese Maßnahme dient dazu als Tragrohr ein einfaches Rohr als Halbzeug für die Herstellung zu verwenden.

Gemäß einem vorteilhaften Unteranspruch umgreift die Fixierkappe den Bajonettverschluss außenseitig. Es liegt damit eine axiale Überdeckung zwischen der Fixierkappe und dem Tragrohr vor, so dass die Möglichkeit zum Schmutzeintrag in das Tragrohr minimiert ist.

Der Bajonettverschlusseinsatz weist eine zumindest in Axialrichtung wirksame Formschlussgeometrie auf, die mit dem Tragrohr und/oder dem Federteller in Eingriff steht. Neben der stoffschlüssigen Verbindung über den eingesetzten Kunststoff für das Tragrohr und die Fixierkappe und Federteller sorgt die Formschlussgeometrie für eine deutlich verbesserte Kraftübertragung zwischen den eingebundenen Bauteilen.

Zum Ausgleich von Längentoleranzen zwischen dem Schwingungsdämpfer, dem Tragrohr und der Fixierkappe ist zwischen dem Schwingungsdämpfer und dem Tragrohr ein axial wirksames Vorspannelement angeordnet.

Anhand der folgenden Figurenbeschreibung soll die Erfindung näher erläutert werden.

Es zeigt:
- Fig. 1: Darstellung der Einbausituation
- Fig. 2: Schnittdarstellung im Bereich der Fixierkappe
- Fig. 3: Querschnittdarstellung im Bereich der Verriegelungsmittel
- Fig. 4: Perspektivische Darstellung zur Fig. 2
- Fig. 5: Verriegelungsmittel zur Fig. 2 als Einzelteil
- Fig. 6: Schnittdarstellung im Bereich der bolzenförmigen Verriegelungsmittel
- Fig. 7: Querschnittsdarstellung im Bereich der Verriegelung zu Fig. 5
- Fig. 8: Verriegelungsmittel zur Fig. 6 als Einzelteil

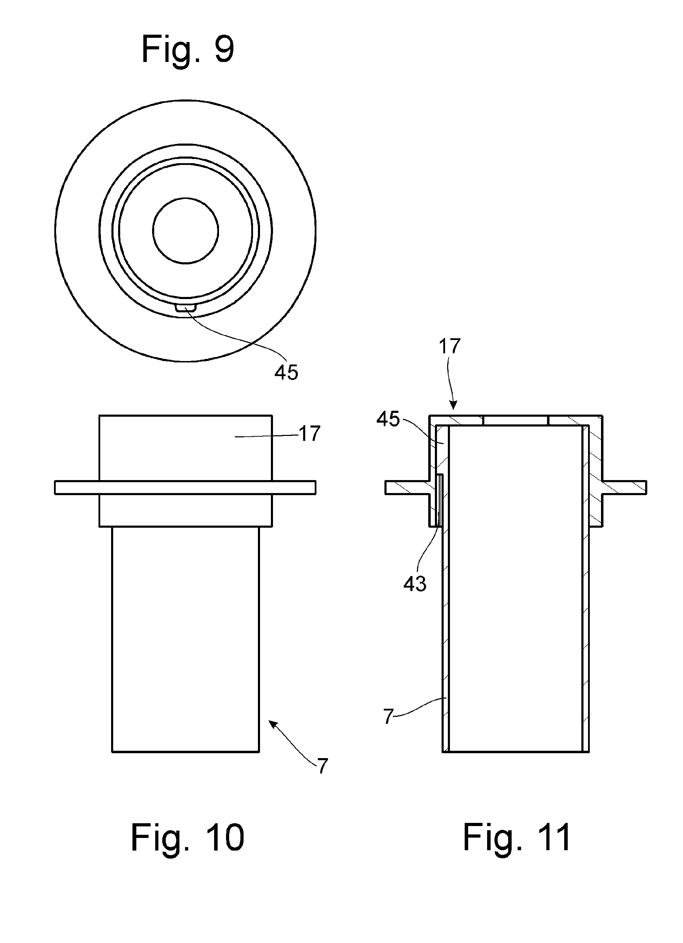

- Fig. 9 - 11: Fixierkappe mit Federteller
- Fig. 12 - 14: Tragrohr mit einer Schutzeinrichtung
- Fig. 15 - 17: Montagedarstellung der Verriegelungsmittel nach Fig. 13
- Fig. 18: Gesamtansicht eines Tragrohrs als Federbein
- Fig. 19: Teilausschnitt von Fig. 18
- Fig. 20 - 22: Fixierkappe als Einzelteil
- Fig. 23 - 25: Bajonettverschlusseinsatz als Einzelteil

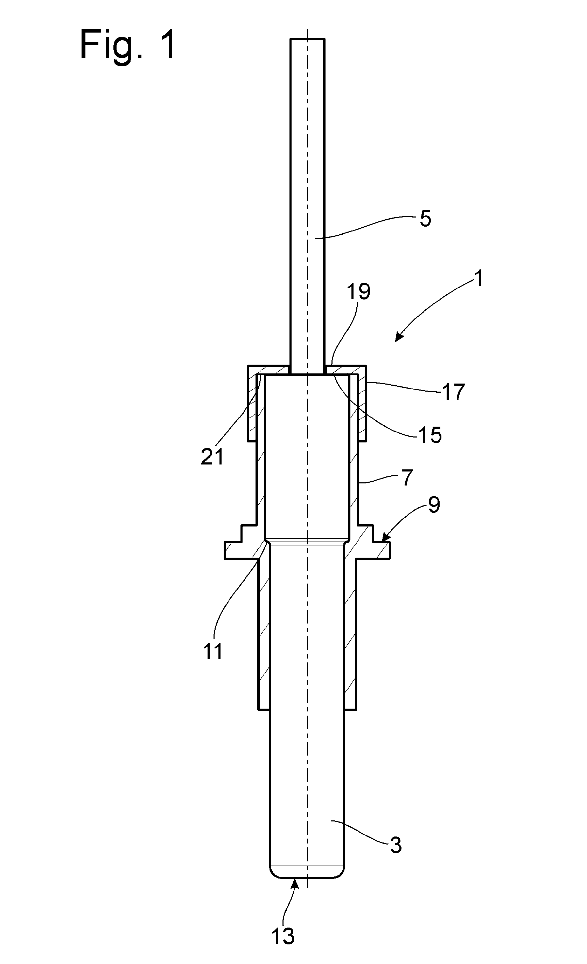

Die Figur 1 zeigt einen Schwingungsdämpfer 1 mit einem äußeren Zylinder 3 und einer im Zylinder axial beweglichen Kolbenstange 5. Der exakte konstruktive Aufbau des Schwingungsdämpfers 1 ist für die Erfindung unerheblich. Zumindest ein Teilabschnitt des Zylinders wird von einem Tragrohr 7 eingehüllt. An dem Tragrohr 7 können verschiedene Anbauteile befestigt sein. Beispielhaft ist ein Federteller 9 für eine nicht dargestellte Tragfeder dargestellt, so dass es sich um einen Schwingungsdämpfer in der Bauform eines Federbeins handelt. Das Tragrohr 7 soll bevorzugt aus Kunststoff bestehen und eine langfaserige Armierung aufweisen.

Das Tragrohr 7 stützt sich axial einerseits an einem Absatz 11 des äußeren Zylinders 3 ab. Dieser Absatz 11 kann durch eine Durchmesserreduzierung gebildet werden. Man kann aber auch einen Boden 13 des Zylinders 3 als Absatz 11 ausnutzen. Als zweite axiale Stützfläche dient eine Stirnfläche 15 des Zylinders 3, an der eine Fixierkappe 17 des Tragrohrs 7 mit einem Boden 19 anliegt. Der Boden 19 der Fixierkappe 17 verfügt über eine Durchgangsöffnung für die Kolbenstange 5. Je nach der Position einer Endfläche 21 des Tragrohrs 7 zur Stirnfläche des äußeren Zylinders 3 des Schwingungsdämpfers 1 ist das Tragrohr 7 axial spielfrei oder mit axialer Bewegungsfreiheit am Schwingungsdämpfer 1 angeordnet.

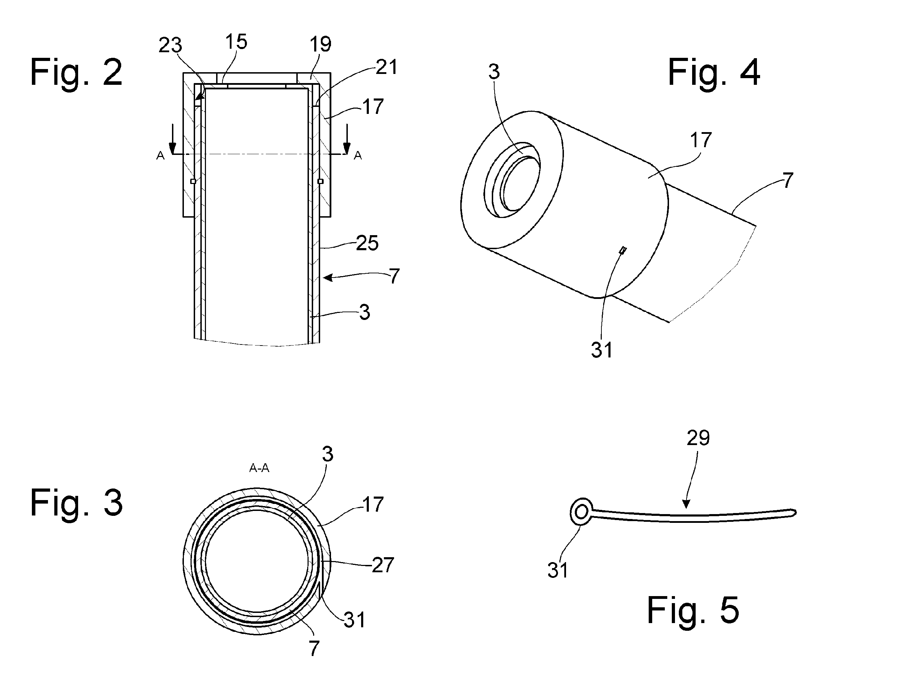

Die Figur 2 beschränkt sich auf die Darstellung des äußeren Zylinders 3, des Tragrohrs 7 und der Fixierkappe 17. In dieser Darstellung kann man erkennen, dass das Tragrohr 7 spielfrei am Zylinder 3 befestigt ist. Die Fixierkappe 17 weist an ihrer Innenwandung 23 und das Tragrohr 7 weist an seiner Außenwand 25 in der Endmontagestellung der Fixierkappe 17 auf dem Tragrohr 7 mindestens einen sich überdeckenden Nutbereich 27 auf, in dem ein Verriegelungsmittel 29 angeordnet ist. Die Zusammenschau mit der Fig. 3 verdeutlicht das Konstruktionsprinzip. Somit sind der Fixierkappe 17 und dem Tragrohr 7 zu den beiden Teilen 17; 7 separate Verriegelungsmittel 29 angeordnet, die den äußeren Zylinder 3 zum Tragrohr 7 über den Boden 19 positionieren.

Wie aus den Fig. 3 und 4 ersichtlich ist, weist Fixierkappe 17 mindestens eine außenseitige Kopplungsöffnung auf, über die das Verriegelungsmittel 29 in den Nutbereich 27 montierbar ist.

Sowohl das Tragrohr 7 wie auch die Fixierkappe 17 weisen vollständig umlaufende Nuten auf, die den sich überdeckenden Nutbereich bilden. Folglich ist die Montageposition der Fixierkappe 17 auf dem Tragrohr 7 in Umfangsrichtung beliebig.

Zur einfacheren Montage des Verriegelungsmittels 25 ist die Kopplungsöffnung 31 tangential zum sich überdeckenden Nutbereich ausgerichtet. Wie die Figur 5 zeigt, wird das Verriegelungsmittel 29 von einem biegefähigen Stab gebildet wird. Das Verriegelungsmittel 29 selbst kann ein Wellprofil oder auch ein Schraubenprofil aufweisen. Ein endseitiger Handhabungsansatz 33 erleichtert die Demontage des Verriegelungsmittels 29, wenn z. B. der Schwingungsdämpfer 1 aus dem Tragrohr entfernt werden soll. Wie die Fig. 3 zeigt, kann das Verriegelungsmittel aufgrund der vollständigen Kammerung innerhalb des Nutbereichs 27 unter keinen Umständen axial den Nutbereich verlassen. Ist die vorgeschriebene Montageposition der Fixierkappe nicht eingenommen, dann kann auch das Verriegelungsmittel nicht eingeführt werden, so dass ohne Schwierigkeit ein Fehler im Montageablauf erkennbar ist.

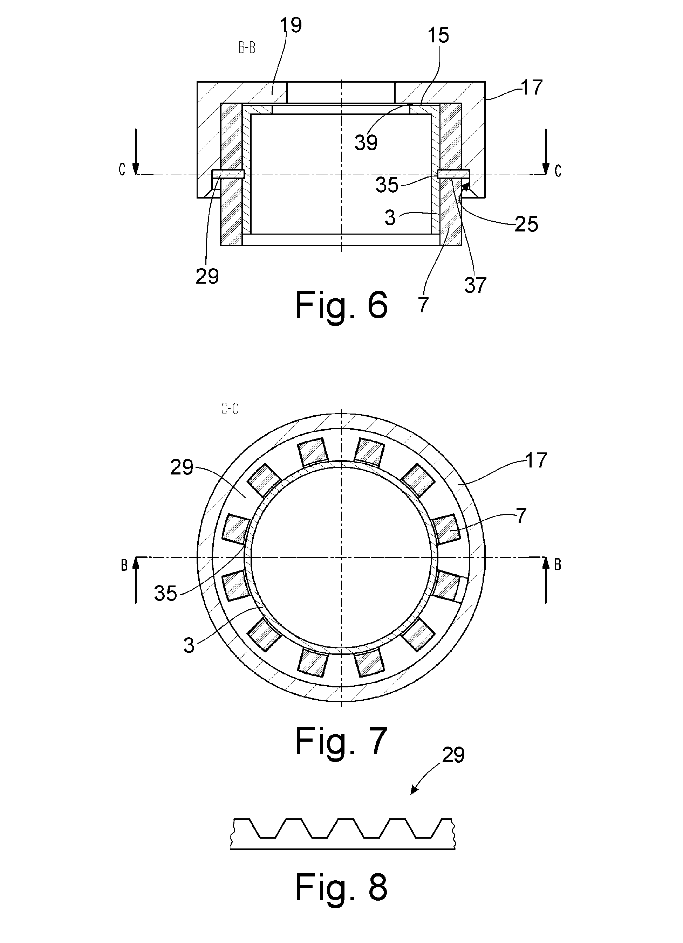

Die Figuren 6 bis 8 beschreiben eine Variante, bei der der äußere Zylinder 3 des Schwingungsdämpfers 1 außenseitig mindestens einen Nutbereich 35 aufweist und das Tragrohr 7 mindestens eine radiale Durchgangsöffnung 37 aufweist, wobei der Nutbereich 35 und die mindestens eine radiale Durchgangsöffnung 37 bei bestimmungsgemäßer Position des Schwingungsdämpfers 1 im Tragrohr 7 in axialer Überdeckung stehen, und das Verriegelungsmittel 29 durch eine radiale Schließbewegung in Eingriff in den Nutbereich 35 gebracht wird.

Damit die Schließposition des Verriegelungsmittels 29 gewährleistet ist, wird das Verriegelungsmittel 29 durch die Innenwandung 25 der Fixierkappe 17 gesichert. Ein radiales Herausgleiten des Verriegelungsmittels 29 aus der Durchgangsöffnung 37 wird verhindert.

Es wird als Verriegelungsmittel mindestens ein Bolzenelement verwendet. Die Figuren 7 und 8 zeigen, dass mehrere Bolzenelemente zu einer Baueinheit zusammengefasst sind, wobei die Bolzenelemente zumindest winkelbeweglich miteinander verbunden sind. Die Baueinheit weist im entspannten Zustand ein Zahnstangenprofil auf und kann in die Kreisbogenform gebracht werden, so dass alle Bolzenelemente im Eingriff sind. Diese Ausgestaltung hat zudem den Vorteil, dass sich die Bolzenelemente bedingt durch ihre Winkelstellung (s. Fig. 7) gegen Herausgleiten sichern. Die einzelnen Bolzenelemente können zueinander leicht verschränkt ausgerichtet sein und damit ein Wellenprofil bilden.

Zur einfacheren Demontage der Bolzenelemente ragen diese in der Verriegelungsposition über die äußere Mantelfläche des Tragrohrs hinaus. Die überstehenden Enden werden von der Kappe abgedeckt, so dass bei der Handhabung der Baueinheit Schwingungsdämpfer-Tragrohr keine Verletzungen auftreten können.

Wie man in de Fig. 6 erkennt, besteht zwischen de Stirnfläche 15 des Zylinders 3 und dem Boden 19 der Fixierkappe 17 ein axialer Spalt 39. Durch diesen Spalt ist sichergestellt, dass die Fixierkappe 17 bei einer Belastung des Tragrohres 7 oder des Zylinders 3 keine axialen Belastungen ausgesetzt ist.

Die Figurengruppe 9 -11 zeigt eine Fixierkappe 17, die einteilig mit einem Federteller 9 ausgeführt ist. Zwischen der Fixierkappe 17 und dem Tragrohr 7 ist eine Verdrehsicherung ausgeführt, die von einer Nut 43 gebildet wird, in die ein radialer Vorsprung 45 des Tragrohrs 7eingreift. Auf die Darstellung des Verriegelungsmittels 29 nach Fig. 5 wurde verzichtet. Prinzipiell ist diese Lösung aber auch bei der Variante nach Fig. 6 einsetzbar.

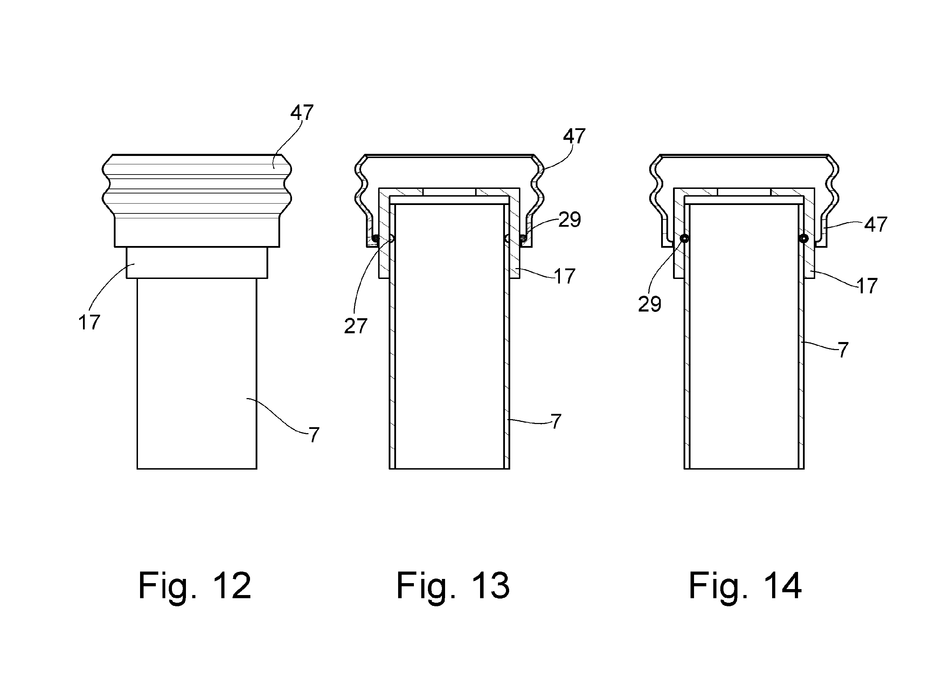

Die Zusammenschau der Fig. 12 bis 14 zeigt ein Tragrohr 7, an dem eine Schutzeinrichtung 47 in der Bauform eines Faltenbalgs angeordnet ist. Die Schutzeinrichtung 47 stützt sich axial am Verriegelungsmittel 29 ab. In dieser Darstellung wird die Schutzreinrichtung 47 gegen eine Abzugbewegung vom Tragrohr 7 gesichert. Es ist jedoch auch möglich, dass sich die Schutzreinrichtung 47 bei einer Stauchbewegung axial an dem Verriegelungsmittel 29 abstützt oder dass die Schutzeinrichtung beidseitig am Verriegelungsmittel 29 ansetzt, so dass beide Bewegungsformen der Schutzeinrichtungen vom Verriegelungsmittel 29 abgestützt werden.

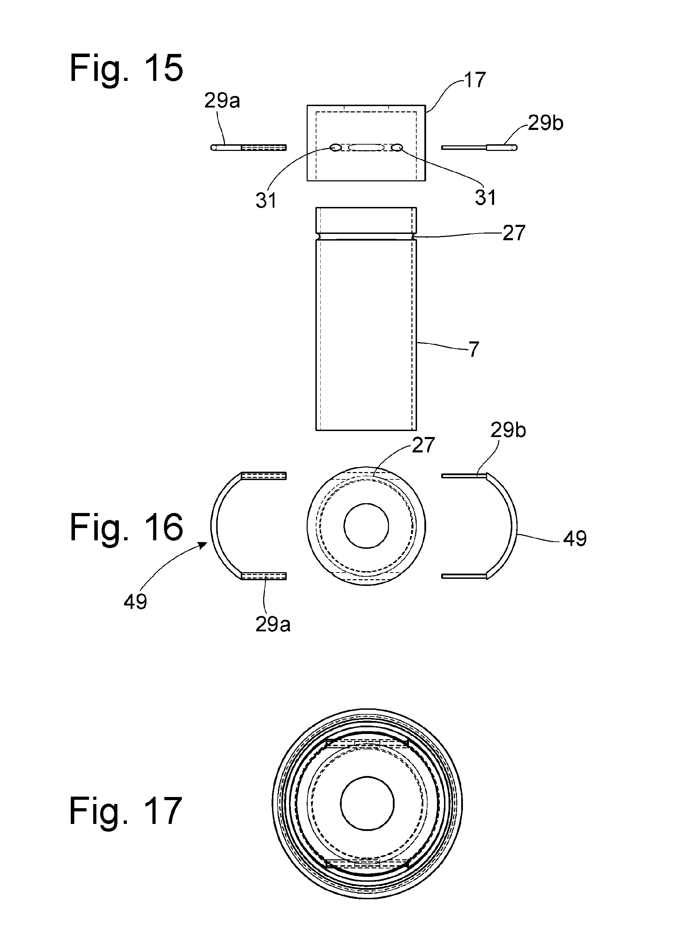

Die Figuren 15 bis 17 zeigen die Verriegelungsmittel 29 zu den Fig. 12 bis 14. Jeweils zwei parallel verlaufende bolzenförmige Verriegelungsmittel 29 sind über einen Verbindungsabschnitt 49 zu einem u-förmigen Bügel zusammengefasst. Der Verbindungsabschnitt 49 bildet den axialen Anschlag der Schutzeinrichtung. Man könnte auch einfach die Verriegelungsmittel 29 über die Mantelfläche der Fixierkappe 17 hinausragen lassen, doch wäre dann die Anschlagfläche deutlich kleiner, als durch den gebogen Verbindungsabschnitt 49, wobei der Biegeradius der Geometrie der Mantelfläche der Fixierkappe 17 angepasst ist.

In diesem Ausführungsbeispiel kommt am Tragrohr 7 bzw. an der Fixierkappe 17 ein Paar von diametral auf gleicher Höhe angeordneten bügelförmigen Verriegelungsmitteln zur Anwendung. Durch die Figurenfolge 15 bis 17 soll verdeutlicht werden, dass ein Verriegelungsmittel 29a hohl ausgeführt ist und das gegenüberliegende Verriegelungsmittel 29b auf einem Längenabschnitt aufnehmen kann. Wenn der Schwingungsdämpfer im Tragrohr 7 angeordnet ist, wird die Fixierkappe 17 auf das Tragrohr 7 geschoben. Anschließend werden die Verriegelungsmittel 29a; 29b über die Kopplungsöffnungen 31 in den Nutbereich 27 geschoben. Dabei greift das Verriegelungsmittel 29b in das Verriegelungsmittel 29a, das auf einem Teilabschnitt hülsenförmig ausgeführt ist. Durch die axiale Überdeckung zwischen dem Tragrohr 7 und dem Verriegelungsmittel 29 einerseits und der Überdeckung zwischen der Fixierkappe 17 und dem Verriegelungsmittel 29 anderseits ist die Fixierkappe 17 ortsfest zum Tragrohr 7 angeordnet. Bei montierter Schutzreinrichtung 47 können die Verriegelungsmittel 29a; 29b nicht aus dem Nutbereich 27 gleiten, da die Schutzeinrichtung 47 die Verbindungsabschnitte 49 der Verriegelungsmittel 29a, 29b radial einhüllt.

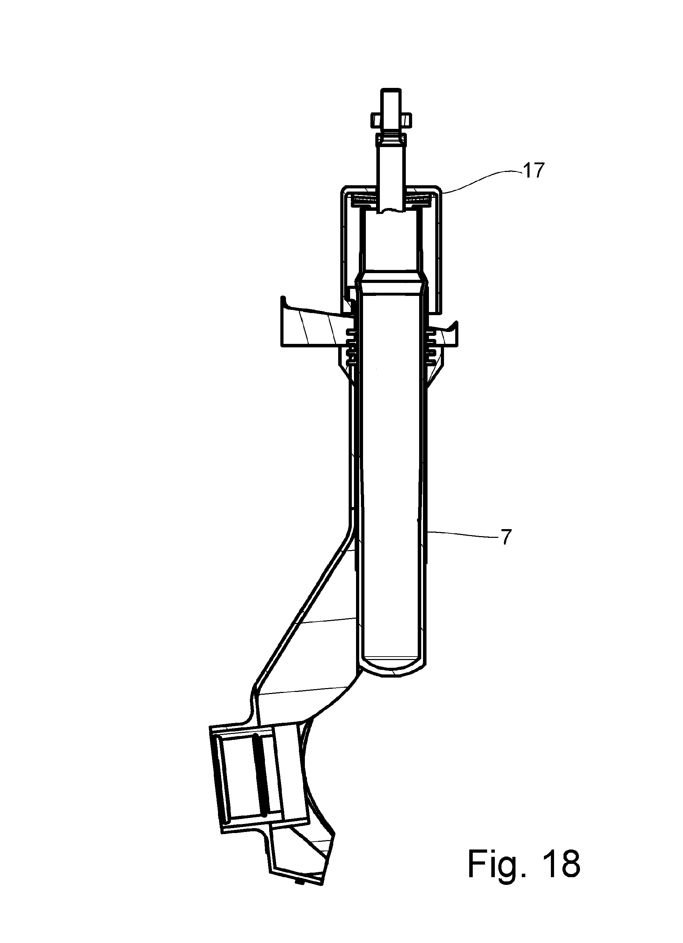

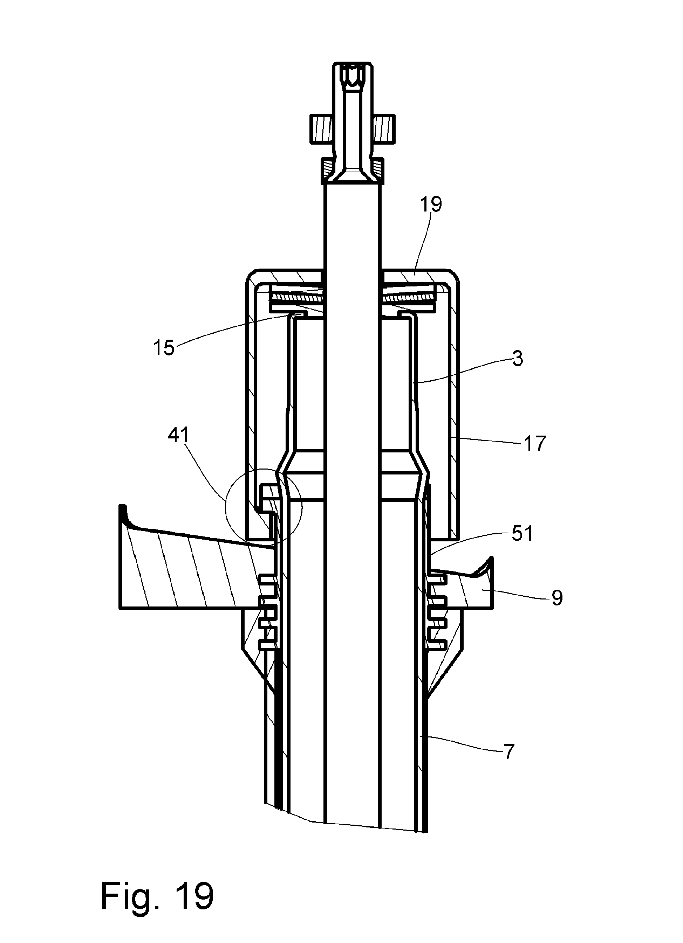

Die Fig. 18 zeigt ein Tragrohr 7 in einer im Vergleich zur Fig. 1 detaillierteren Darstellung, dessen Fixierkappe 17 über einen Bajonettverschluss 41 (Fig. 19) mit dem Tragrohr 7 verbunden ist. An dem Tragrohr 7 ist der Federteller 9 angeordnet. Des Weiteren umfasst das Tragrohr 7 einen Bajonettverschlusseinsatz 51, der ebenfalls bevorzugt aus einem Kunststoff gleichen Typs wie das Tragrohr 7 besteht. Zwischen dem Federteller 9 und dem Bajonettverschlusseinsatz 51 sowie zum Tragrohr 7 besteht für die Übertragung von Axialkräften eine Formschlussgeometrie 53. Beispielhaft werden ringförmige Rippen verwendet, die vom Kunststoff des Federtellers 9 und/oder des Tragrohrs 7 umgriffen wird.

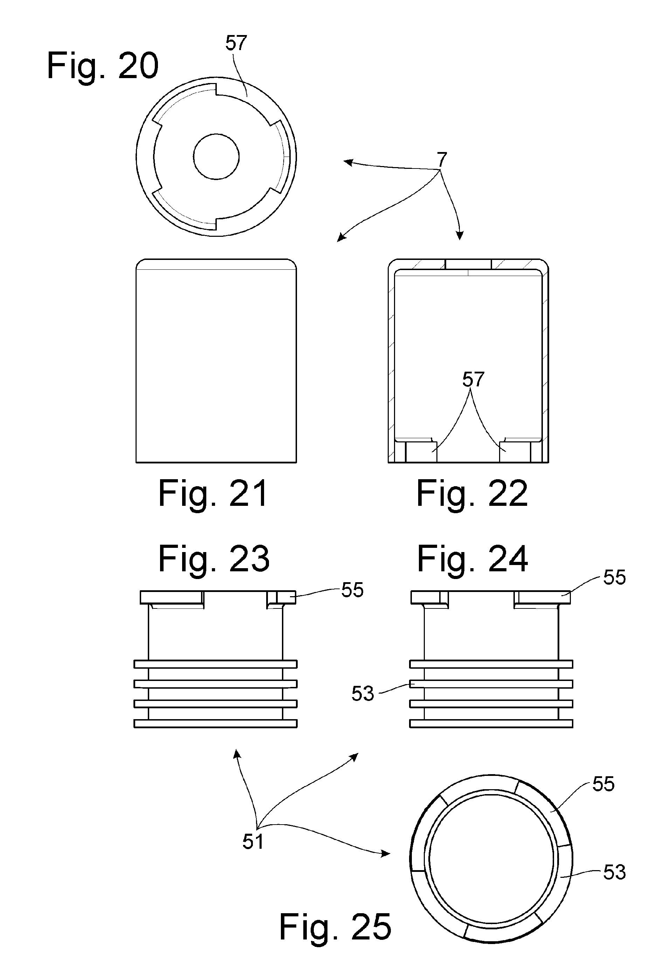

Die Figurengruppe 20 bis 22 zeigt die Fixierkappe 17 zu den Fig. 18 und 19 als Einzelteil. In der entsprechenden Einbaulage verdeutlichen die Figuren 23 bis 25 die Ausgestaltung des Bajonettverschlusseinsatzes 51. An dem in Richtung der Fixierkappe 17 weisenden Ende des Bajonettverschlusseinsatzes 51 sind außenseitig bogenförmige Segmente 55 ausgeführt. An der Fixierkappe 17 sind ebenfalls bogenförmige Segmente 57 angeformt, wobei die Lücken zwischen den Segmenten 55, 57 derart groß dimensioniert sind, dass die Fixierkappe 17 außenseitig über den Bajonettverschlusseinsatz 51 geschoben werden kann. Dadurch kann die Fixierkappe den Bajonettverschluss 41 außenseitig umgreifen. Mit einer einfachen Verdrehbewegung der Fixierkappe 17 zum Tragrohr 7 wird der Bajonettverschluss 41 in Eingriff gebracht. Wie die Fig. 19 zeigt kann optional zwischen der Stirnfläche 15 des äußeren Zylinders 3 und dem Boden 19 der Fixierkappe 17 ein axial wirksames Vorspannelement 57, z. B. in der Form einer oder mehrerer Tellerfedern, eingesetzt werden.

### Bezugszeichenliste

- 1: Schwingungsdämpfer
- 3: äußerer Zylinder
- 5: Kolbenstange
- 7: Tragrohr
- 9: Federteller
- 11: Absatz
- 13: Boden des Zylinders
- 15: Stirnfläche des Zylinders
- 17: Fixierkappe
- 19: Boden der Fixierkappe
- 21: Endfläche des Tragrohrs
- 23: Innenwandung der Fixierkappe
- 25: Außenwandung des Zylinders
- 27: Nutbereich
- 29: Verriegelungsmittel
- 31: Koppiungsöffnung
- 33: Handhabungsansatz
- 35: Nutbereich im Zylinder
- 37: Durchgangsöffnung im Tragrohr
- 39: Spalt
- 41: Bajonettverschluss
- 43: Nut
- 45: Vorsprung
- 47: Schutzeinrichtung
- 49: Verbindungsabschnitt
- 51: Bajonettverschlusseinsatz
- 53, 55: bogenförmige Segmente
- 57: Vorspannelement

## Patentansprüche

1. Tragrohr (7) für einen Schwingungsdämpfer (1), umfassend eine axiale Stützfläche, auf der ein äußere Zylinder (3) des Schwingungsdämpfers (1) anliegt, mit einer Fixierkappe (17), die eine zweite axiale Stützfläche zur Sicherung des Zylinders (3) bei einer gegensinnigen Belastung hält, wobei die Fixierkappe (17) formschlüssig mit dem Tragrohr (7) verbunden ist,
**dadurch gekennzeichnet,**
**dass** zwischen der Fixierkappe (17) und dem Tragrohr (7) zu den beiden Teilen (7; 17) separate Verriegelungsmittel (29) angeordnet sind, die den äußeren Zylinder (3) zum Tragrohr (7) positionieren.

2. Tragrohr nach Anspruch 1,
**dadurch gekennzeichnet,**
**dass** die Fixierkappe (17) an ihrer Innenwandung (23) und das Tragrohr (7) an seiner Außenwand (25) in der Endmontagestellung der Fixierkappe (17) auf dem Tragrohr (7) mindestens einen sich überdeckenden Nutbereich (27) aufweisen, in dem das Verriegelungsmittel (29) angeordnet ist.

3. Tragrohr nach Anspruch 2,
**dadurch gekennzeichnet,**
**dass** die Fixierkappe (17) mindestens eine außenseitige Kopplungsöffnung (31) aufweist, über die das Verriegelungsmittel (29) in den Nutbereich (27) montierbar ist.

4. Tragrohr nach Anspruch 2,
**dadurch gekennzeichnet,**
**dass** das Tragrohr (7) und die Fixierkappe (17) vollständig umlaufende Nuten aufweisen, die den sich überdeckenden Nutbereich (27) bilden.

5. Tragrohr nach Anspruch 3,
**dadurch gekennzeichnet,**
**dass** die Kopplungsöffnung (31) tangential zum sich überdeckenden Nutbereich (27) ausgerichtet ist.

6. Tragrohr nach Anspruch 1,
**dadurch gekennzeichnet,**
**dass** das Verriegelungsmittel (29) von einem biegefähigen Stab gebildet wird.

7. Tragrohr nach Anspruch 1,
**dadurch gekennzeichnet,**
**dass** das Verriegelungsmittel (29) ein Wellprofil aufweist.

8. Tragrohr nach Anspruch 1,
**dadurch gekennzeichnet,**
**dass** der äußere Zylinder (3) des Schwingungsdämpfers (1) außenseitig mindestens einen Nutbereich (35) aufweist und das Tragrohr (7) mindestens eine radiale Durchgangsöffnung (37) aufweist, wobei der Nutbereich (35) und die mindestens eine radiale Durchgangsöffnung (37) bei bestimmungsgemäßer Position des Schwingungsdämpfers (1) im Tragrohr (7) in axialer Überdeckung stehen, und das Verriegelungsmittel (29) durch eine radiale Schließbewegung in Eingriff in den Nutbereich (35) gebracht wird.

9. Tragrohr nach Anspruch 8,
**dadurch gekennzeichnet,**
**dass** die Schließposition des Verriegelungsmittels (29) durch die Innenwandung (23) der Fixierkappe (17) gesichert wird.

10. Tragrohr nach Anspruch 8,
**dadurch gekennzeichnet,**
**dass** als Verriegelungsmittel (29) mindestens ein Bolzenelement verwendet wird.

11. Tragrohr nach Anspruch 10,
**dadurch gekennzeichnet,**
**dass** mehrere Bolzenelemente 29 zu einer Baueinheit zusammengefasst sind, wobei die Bolzenelemente (29) zumindest winkelbeweglich miteinander verbunden sind.

12. Tragrohr nach Anspruch 11,
**dadurch gekennzeichnet,**
**dass** die Baueinheit im entspannten Zustand ein Zahnstangenprofil aufweist.

13. Tragrohr nach Anspruch 8,
**dadurch gekennzeichnet,**
**dass** das Bolzenelement (29) in der Verriegelungsposition über die äußere Mantelfläche des Tragrohrs (7) hinausragt.

14. Tragrohr nach einem der Ansprüche 1 bis 13,
**dadurch gekennzeichnet,**
**dass** die Fixierkappe (17) unabhängig von dem Verriegelungsmittel (29) über eine Verdrehsicherung in Umfangsrichtung zum Tragrohr (7) ausgerichtet ist.

15. Tragrohr nach Anspruch einem der Ansprüche 1 bis 14,
**dadurch gekennzeichnet,**
**dass** die Fixierkappe (17) einteilig mit einem Federteller (9) ausgeführt ist.

16. Tragrohr nach Anspruch 14,
**dadurch gekennzeichnet,**
**dass** die Verdrehsicherung von einer Nut (43) gebildet wird, in die ein radialer Vorsprung (45) eingreift.

17. Tragrohr nach Anspruch 1,
**dadurch gekennzeichnet,**
**dass** das Tragrohr (7) eine Schutzeinrichtung (47) für eine aus dem Tragrohr (7) ragende Baugruppe (5) des Schwingungsdämpfers (1) aufweist, wobei sich die Schutzeinrichtung (47) axial an dem Verriegelungsmittel (29) abstützt.

18. Tragrohr nach Anspruch 17,
**dadurch gekennzeichnet,**
**dass** zwei bolzenförmige Verriegelungsmittel (29) zu einem u-förmigen Bügel zusammengefasst sind, wobei ein Verbindungsabschnitt (49) des u-förmigen Bügels für die Schutzeinrichtung (47) einen axialen Anschlag bildet.

19. Tragrohr nach Anspruch 18,
**dadurch gekennzeichnet,**
**dass** die Fixierkappe (17) über mehrere bügelförmige Verriegelungsmittel (29; 49) am Tragrohr (7) befestigt ist.

20. Tragrohr nach Anspruch 18,
**dadurch gekennzeichnet,**
**dass** ein Paar von bügelförmigen Verriegelungsmitteln (29a; 29b; 49) diametral auf gleicher Höhe an der Fixierkappe (17) angeordneten sind.

21. Tragrohr nach Anspruch 20,
**dadurch gekennzeichnet,**
**dass** die bolzenförmigen Verriegelungsmittel (29a, 29b; 49) der paarweise angeordneten Bügel ineinander schiebbar sind.

22. Tragrohr nach dem Oberbegriff von Anspruch 1,
**dadurch gekennzeichnet,**
**dass** die Fixierkappe (7) und das Tragrohr (17) über einen Bajonettverschluss (47) miteinander verbunden sind.

23. Tragrohr nach Anspruch 22,
**dadurch gekennzeichnet,**
**dass** das Tragrohr (7) einen Bajonettverschlusseinsatz (51) aufweist.

24. Tragrohr nach Anspruch 23,
**dadurch gekennzeichnet,**
**dass** der Bajonettverschlusseinsatz (51) mit einem Federteller (9) verbunden ist.

25. Tragrohr nach Anspruch 21,
**dadurch gekennzeichnet,**
**dass** die Fixierkappe (17) den Bajonettverschluss (41) außenseitig umgreift.

26. Tragrohr nach Anspruch 23,
**dadurch gekennzeichnet,**
**dass** der Bajonettverschlusseinsatz (51) eine zumindest in Axialrichtung wirksame Formschlussgeometrie (55) aufweist, die mit dem Tragrohr (7) und/oder dem Federteller (9) in Eingriff steht.

27. Tragrohr nach einem der Ansprüche 1 bis 26 ,
**dadurch gekennzeichnet,**
**dass** zwischen dem Schwingungsdämpfer (1) und dem Tragrohr (7; 17) ein axial wirksames Vorspannelement (57) angeordnet ist.
